# EUROPÄISCHE PATENTSCHRIFT

(11) **EP 0 909 728 B1**
(45) Veröffentlichungstag und Bekanntmachung des Hinweises auf die Patenterteilung: **04.04.2007**
(21) Anmeldenummer: 98116750.5
(22) Anmeldetag: 04.09.1998
(51) Int. Cl.: B65G 33/04

(54) **Vorrichtung und Verfahren zum Dekorieren von Objekten**
Device and method for decorating objects
Dispositif et procédé de décoration d'objets

(30) Priorität: 14.10.1997 DE 19745313
(43) Veröffentlichungstag der Anmeldung: 21.04.1999
(73) Patentinhaber: Werner Kammann Maschinenfabrik GmbH & Co. KG, 32257 Bünde (DE)
(72) Erfinder: Hellmeier, Joachim, 32289 Rödinghausen (DE); Steffen, Volker, 32051 Herford (DE)
(74) Vertreter: Koepsell, Helmut

(56) Entgegenhaltungen:
- EP-A- 0 089 543
- DE-A- 3 224 330
- DE-U- 8 913 408
- GB-A- 1 032 546
- US-A- 5 456 169
- US-A- 5 481 970
- US-A- 5 520 107
- US-A- 5 542 768
- US-A- 5 865 114

## Beschreibung

Die Erfindung betrifft eine Vorrichtung und ein Verfahren zum Dekorieren von Objekten, die entlang einem zumindest auf einem Teilabschnitt seiner Erstreckung linearen Transportweg durch die Behandlungsstationen transportiert werden.

Beim Dekorieren von Objekten unter Anwendung z. B. eines Druckverfahrens, bei welchem nacheinander mehrere Einzeldruckbilder auf das Objekt aufgebracht werden, die zusammen das im allgemeinen mehrfarbige Gesamtdruckbild bilden, besteht die Gefahr, daß sich die Farben von zwei oder mehr Einzeldruckbildern, wenn auch nur geringfügig, miteinander vermischen, so daß das resultierende Gesamtdruckbild einen Farbeindruck vermittelt, welcher nicht dem beabsichtigten Farbeindruck entspricht. Diese Gefahr ist insbesondere dann gegeben, wenn Oberflächen bedruckt werden, die sehr glatt sind derart, daß sie einen Saugeffekt für die Druckfarbe, wie er beispielsweise bei Papier vorhanden ist, nicht aufweisen. Als Beispiele derartiger zu bedruckender Objekte können CDs, Telefonkarten usw. genannt werden.

Eine Voraussetzung für die Herstellung eines qualitativ guten Gesamtdruckbildes, welches unterschiedliche Farben aufweist, besteht darin, daß das zu bedruckende Objekt und die Druckwerke zum Aufbringen der Teildruckbilder genau zueinander ausgerichtet werden können. Die dazu erforderliche Genauigkeit beim Transport der Objekte in die jeweilige Druckstation und auch während des Druckvorganges, bei welchem das Objekt beispielsweise entsprechend der Umfangsgeschwindigkeit des Druckzylinders bewegt werden muß, läßt sich mit den heute üblichen, im allgemeinen absatzweise rotierenden Transporttischen oder Transporträdern nicht erreichen, an deren Umfang die Behandlungsstationen, also auch die Druckstation angeordnet sind. Dies ist im wesentlichen darauf zurückzuführen, daß bei diesen Tischen oder Rädern ein gewisses Spiel im Antrieb und in der Deshalb erfolgt hier das Bedrucken bei ruhendem Objekt zwischen zwei Transportschritten des Tisches oder Rades (US-PT 5,456,169). Lagerung nie ganz zu vermeiden ist. Andererseits haben diese Tische oder Teller auch den Nachteil, daß sie mit zunehmender Anzahl der am Umfang anzuordnenden Behandlungsstationen einen zunehmenden Durchmesser aufweisen, so daß sie nicht mehr oder nur noch mit Schwierigkeiten transportiert werden können. Zwei Transpartschilken

US-A-5,481,970 offenbart eine Rotations-Druckmaschine, bei welcher die Träger für die Objekte von einer intermittierend umlaufenden Kette getragen werden bzw. diese Kette bilden.

GB-A-1,032,546 offenbart ein Fördersystem mit Schnecken als Transportelementen, die so ausgebildet sind, dass mehrere damit in Eingriff befindliche, als Gefässe ausgebildete Träger für das zu transportierende Gut mit unterschiedlichen Geschwindigkeiten vorbewegt werden können.

Der Erfindung liegt die Aufgabe zugrunde, Vorrichtung und Verfahren der einleitend beschriebenen Art so auszugestalten, daß die Nachteile bekannter Vorrichtungen vermieden werden. Insbesondere wird eine präzisere Ausrichtung der Objekte zum Druckwerk angestrebt, wobei dies mit einfachen Mitteln erfolgen soll, gegebenenfalls derart, daß für den Transport und die Ausrichtung bzw. Bewegung des Objektes relativ zum jeweiligen Druckwerk dasselbe Mittel verwendet werden kann. Trotzdem soll es möglich sein, die Objekte bei ihrem Transport mit unterschiedlichen Geschwindigkeiten zu bewegen, die den Erfordernissen in den jeweiligen Behandlungsstationen angepaßt sein können.

Diese Aufgabe wird durch Anwendung der im Kennzeichen der Ansprüche 1 bzw. 29 angegebenen Mittel und Maßnahmen gelöst.

Aufgrund der formschlüssigen Verbindung zwischen Schnecke und Objektträger wird letzterer in den Bereichen, in denen der Schneckengang nicht senkrecht zur Längsachse der Schnecke verläuft, bei rotierender Schnecke parallel zur Längsachse derselben entlang dem Transportweg bewegt. Unter der Voraussetzung, daß die zu bedruckenden Objekte innerhalb des Objektträgers eine definierte Lage einnehmen, ist über die Steigung des Schneckenganges und die Rotationsgeschwindigkeit der Schnecke eine genaue Ausrichtung des Objektes zur jeweiligen Behandlungsstation, also beispielsweise einer Druckstation, gewährleistet.

Ein weiterer Vorteil der Verwendung einer Transportschnecke besteht darin, daß durch eine über die Länge der Schnecke sich ändernde Steigung des Schneckenganges Änderungen der Geschwindigkeit, mit welcher der Wagen entlang dem Transportweg bewegt wird, ohne zusätzliche Maßnahmen auch bei konstanter Rotationsgeschwindigkeit der Schnecke möglich sind. Bei stationär angeordneten Druckwerken mit einem umlaufenden Druckzylinder kann der Schneckengang im Bereich des Druckwerkes so verlaufen, daß das Objekt mit einer konstanten Geschwindigkeit durch das Druckwerk geführt wird, welche der Umfangsgeschwindigkeit der Mantelfläche des Druckzylinders entspricht, der das zu übertragende Druckbild trägt. Andererseits können im Bereich der Trocknungsstationen die Objektträger langsamer bewegt werden, um den erwünschten Trocknungseffekt zu erreichen. Eine langsamere Geschwindigkeit kann z. B. auch in einer Station erforderlich sein, in welcher die Objekte identifiziert werden.

Der Eingriff zwischen dem Schneckengang und dem Objektträger kann in vorteilhafter Weise dadurch herbeigeführt werden, daß der Schneckengang mit wenigstens einer am Objektträger angebrachten Mitnehmerolle oder dgl. zusammenwirkt derart, daß ein Formschluß zwischen Schneckengang und Objektträger vorhanden ist. Um unter allen Umständen eine präzise Ausrichtung des Objektträgers zur Schnecke und damit zur jeweiligen Behandlungsstation erreichen zu können, ist es zweckmäßig, zwei Rollen oder dgl. vorzusehen, zwischen denen ein Abstand vorhanden ist, in den der Schneckengang eingreift, wobei aufgrund der Tatsache, daß die Rollen bei der Drehbewegung des Schnekkenganges sich an diesem abwälzen, die Toleranz zwischen den beiden Rollen und dem Schneckengang zur Erzielung einer großen Präzision zumindest im Bedarfsfall außerordentlich gering sein kann. Um unabhängig von der Steigung dieses Schneckenganges einen definierten Formschluß zwischen Schneckengang und Objektträger, beispielsweise den beiden Mitnehmerrollen, zu erzielen, ist es zweckmäßig, den Schneckengang in Abhängigkeit von seiner Steigung unterschiedlich breit auszubilden derart, daß in jedem Fall, also insbesondere bei jeder Steigung, die bereits erwähnte möglichst toleranzfreie formschlüssige Verbindung zwischen Schneckengang und Objektträger erreichbar ist.

Im einzelnen kann die Vorrichtung so ausgebildet sein, daß der Transportweg für die Objektträger zwei einen horizontalen Abstand voneinander aufweisende Führungen mit einem V-förmigen Querschnitt aufweist, von denen jede mit wenigstens einer am Objektträger angebrachten Führungsrolle zusammenwirkt, deren Mantelfläche einen entsprechenden V-förmigen Querschnitt aufweist.

Damit diese Führungen keine großen vertikalen Kräfte aufzunehmen brauchen, die zumindest in den Druckstationen auf das Objekt und somit auch auf den Objektträger einwirken können, ist jeder Objektträger zweckmäßigerweise mit zusätzlichen Stützrollen versehen, die auf einer Stützfläche abgestützt sind. Letztere braucht in vielen Fällen nur im Bereich der Druckstation vorgesehen zu sein.

In der Zeichnung sind zwei Ausführungsbeispiele der Erfindung dargestellt. Es zeigen:
- Fig. 1: im Schema die Draufsicht einer Vorrichtung zum Dekorieren von CDs,
- Fig. 2: eine Ansicht eines Abschnittes des Transportweges etwa in Richtung der Pfeile II-II der Fig. 1, wobei jedoch das Gehäuse der Transportschnecke weggelassen ist,
- Fig. 3: einen Schnitt nach der Linie III-III der Fig. 2,
- Fig. 4: eine Draufsicht etwa in Richtung des Pfeiles IV der Fig. 3,
- Fig. 5: eine Seitenansicht, teilweise im Schnitt, etwa in Richtung der Pfeile V-V,
- Fig. 6: im Schema die Draufsicht einer zweiten Ausführungs form mit Behandlungsstationen.

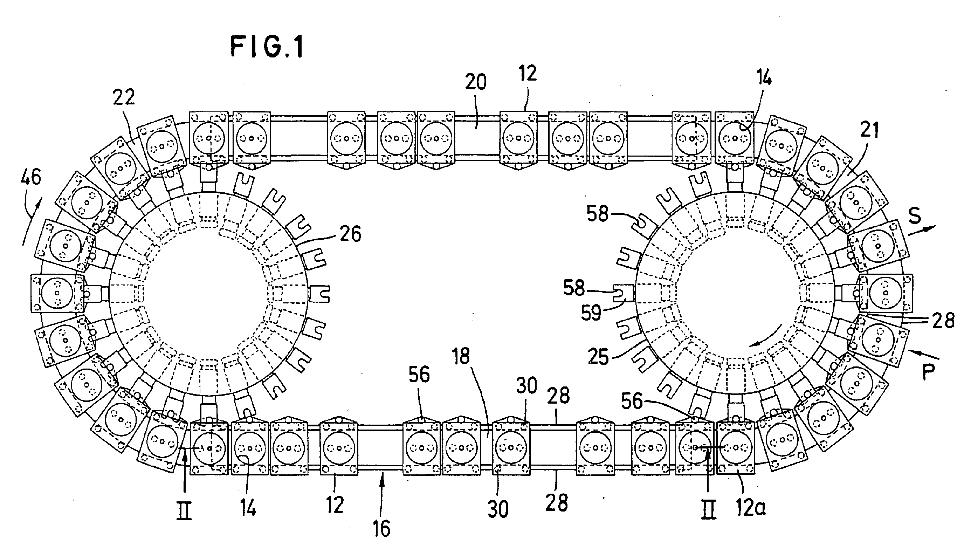

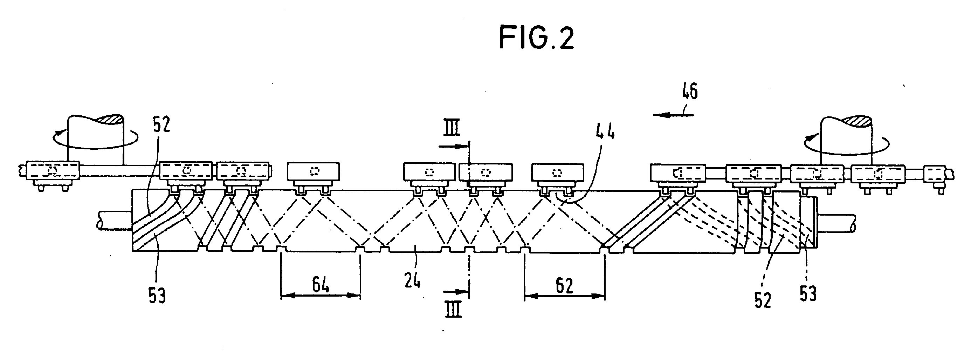

Die in Fig. 1 der Zeichnung dargestellte Druckmaschine 10 ist zum Bedrucken von CDs vorgesehen. Sie weist mehrere als Wagen ausgebildete Objektträger 12 auf, die oberseitig jeweils mit einer Halterung 15 versehen sind, die eine Aufnahme 14 für die zu bedruckende CD aufweist. Die Objektträger 12 werden entlang einem Transportweg 16 bewegt, der zwei in einem horizontalen Abstand voneinander befindliche lineare Abschnitte 18 und 20 und zwei etwa halbkreisförmige Abschnitte 21 bzw. 22 aufweist, die die beiden linearen Abschnitte 18, 20 miteinander verbinden. Jedem der beiden linearen Abschnitte 18, 20 des Transportweges 16 ist eine Transportschnecke 24 (Fig. 2) zugeordnet, die den in Richtung des Pfeiles 46 erfolgenden Transport der Objektträger 12 in den linearen Abschnitten 18, 20 bewirkt. Jedem der beiden bogenförmigen Abschnitte 21, 22 des Transportwegs ist jeweils ein in horizontaler Ebene umlaufendes Transportrad 25 bzw. 26 zugeordnet, das bei dem in der Zeichnung dargestellten Ausführungsbeispiel kontinuierlich umläuft.

Im Bereich jedes der beiden linearen Abschnitte 18, 20 des Transportweges sind zwei in einem horizontalen Abstand voneinander angeordnete Führungsschienen 28 vorhanden, die einen V-förmigen Querschnitt aufweisen. Am Objektträger 12 sind unterseitig Führungsrollen 30 angebracht, die an ihrer Mantelfläche einen umlaufenden V-förmigen Ausschnitt aufweisen, der an den Querschnitt der jeweiligen Führungsschiene 28 bzw. 29 angepaßt ist. Die Führungsrollen 30 sind dabei paarweise angeordnet derart, daß jeweils ein Rollenpaar 30 mit einer der beiden Führungsschienen 28 zusammenwirkt.

Die Abschnitte der Führungsschienen 28, die sich jeweils zwischen den beiden bogenförmigen Abschnitten 21 bzw. 22 des Transportwegs 16 und damit zwischen den beiden Transporträdern 25, 26 erstrecken, werden jeweils von einem Gehäuse 32 getragen, welches die dem jeweiligen Abschnitt 18 bzw. 20 zugeordnete Transportschnecke 24 aufnimmt. Das Gehäuse 32 weist oberseitig im Bereich zwischen den beiden Führungsschienen 28 einen sich über die gesamte Länge der Transportschnecke 24 erstreckenden Durchgang 34 auf. Im Bereich der Transporträder 25, 26 werden die Führungsschienen 28 von einer besonderen Halterung getragen, die in der Zeichnung nicht dargestellt ist.

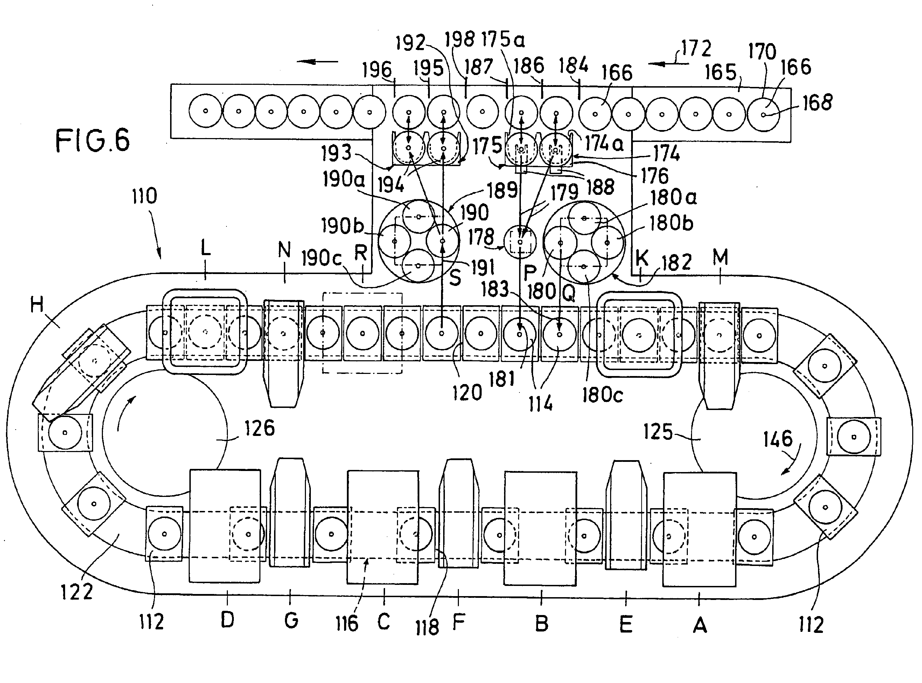

Der Objektträger 12 ist unterseitig mit einem Fortsatz 35 versehen, an dem zwei Mitnehmerrollen 36, 37 angebracht sind, die jeweils um eine vertikale Achse rotierbar sind und in Nuten 52, 53 der Transportschnecke 24 eingreifen. Insbesondere Fig. 5 läßt erkennen, daß der Schneckengang 44, der durch die beiden in einem Abstand voneinander befindlichen und entsprechend dem Verlauf des Schneckenganges umlaufenden, im wesentlichen parallelen Nuten 52, 53 begrenzt wird, in den Bereich 43 zwischen den beiden Mitnehmerrollen 36, 37 eingreift und so die in Transportrichtung 46 vordere Mitnehmerrolle 36 hintergreift mit der Folge, daß in den Längsabschnitten der Schnecke, in denen der Schneckengang 44 keinen genau senkrecht zur Längsachse der Schnecke verlaufenden Abschnitt aufweist, eine Rotationsbewegung der Schnecke um ihre Längsachse eine Verschiebung des jeweiligen Objektträgers 12 entlang dem jeweiligen linearen Transportwegabschnitt 18 bzw. 20 bewirkt.

Durch entsprechende Bemessung des Abstandes zwischen den beiden Rollen 36, 37 und der Breite des Schneckenganges 44 kann so eine Bewegung des Objektträgers mit einer Genauigkeit erreicht werden, die weit über die Genauigkeit bekannter Maschinen zum Dekorieren von Objekten hinausgeht. Zudem kann wenigstens die in Transportrichtung vordere Mitnehmerrolle 36 geringfügig ballig ausgebildet sein derart, daß ihr Durchmesser im mittleren Bereich etwas größer ist und so ein genau definierter umlaufender Berührungsbereich insbesondere zwischen der vorn liegenden Mitnehmerrolle 36 und der Flanke 49 des-Schneckenganges 44 gewährleistet ist. Die Balligkeit der Mitnehmerrollen 36 und/oder 37 ist so gering, daß sie in der Zeichnung nicht gesondert dargestellt ist.

Die in der Zeichnung, insbesondere Fig. 5, dargestellte Beziehung zwischen den Mitnehmerrollen 36, 37 des Objektträgers 12 einerseits und dem Schneckengang 44 andererseits stellt eine Zwangsführung für den Objektträger 12 dar, die bei entsprechender Ausgestaltung der Transportschnecke die Möglichkeit gibt, den Objektträger 12 mit einer bisher nicht erreichbaren Genauigkeit zu positionieren und relativ beispielsweise zu einer Druckstation mit einer bestimmten Geschwindigkeit zu bewegen. Da eine sehr präzise Führung und Positionierung des Objektes nicht in allen Behandlungssationen erforderlich ist, kann es zweckmäßig sein, den Schneckengang 44 so auszubilden, daß in den Stationen, in denen eine große Präzision bezüglich der Positionierung und des Transportes des Objektes erforderlich ist, die in Transportrichtung 46 vordere Mitnehmerrolle 36 an der in Transportrichtung hinteren Flanke 49 der Nut 52 anliegt und dabei die hintere Mitnehmerrolle 37 an der in Transportrichtung vorderen Flanke 54 der hinteren Nut 53 anliegt, so daß der Wagen in Transportrichtung und entgegengesetzt dazu genau zur Schnecke bzw. zum Schneckengang ausgerichtet ist. In den Bereichen, in denen keine so hohe Genauigkeit erforderlich ist, beispielsweise in den Trocknungsstationen, wird es im allgemeinen ausreichen, daß lediglich die in Transportrichtung vordere Mitnehmerrolle 36 am Gang 44 anliegt. Die hintere Mitnehmerrolle 37 braucht nicht an einer Flanke der sie aufnehmenden Nut 54 anzuliegen. Es ist somit hier ein gewisses Spiel vorhanden, welches den Verschleiß der Schnecke reduziert. Diese unterschiedlichen Eingriffsverhältnisse zwischen den Mitnehmerrollen 36 bzw. 37 und der jeweils zugeordneten Nut können dadurch erreicht werden, daß die Breite des Schneckengangs 44 sich über die Länge der Schnecke entsprechend ändert.

Weiterhin ist der Objektträger 12 im Bereich zwischen den beiden Führungsrollen-Paaren 30 mit zwei Stützrollen-Paaren versehen, deren Rollen 47 jeweils um eine im wesentlichen horizontale Achse rotierbar sind. Die Stützrollen 47 laufen auf Stützflächen 48, die von der oberen Begrenzungsfläche der jeweiligen Führungsschiene 28 gebildet werden, und haben insbesondere die Funktion, die beim Bedruckungsvorgang durch den Druckzylinder auf das Objekt und damit den Objektträger 12 übertragenen Kräfte abzufangen, so daß diese nicht auf die Führungsrollen 30 einwirken. Bei dem in der Zeichnung dargestellten Ausführungsbeispiel werden die Führungsschienen 28 vom Schneckengehäuse 32 getragen, welches ohne weiteres so ausgeführt und bemessen sein kann, daß es die beim Bedruckungsvorgang unter Verwendung beispielsweise eines Offset-Zylinders wirksam werdenden vertikalen Kräfte ohne merkliche Verformung aufnimmt. Da in anderen Behandlungsstationen, beispielsweise einer Siebdruckstation oder einer Trocknungsstation, derartige Kräfte nicht auftreten, reicht es aus, die Stützflächen 48 nur im Bereich solcher Behandlungsstationen vorzusehen, bei denen vertikale Kräfte zu erwarten sind, die von den Führungsschienen 28 nicht aufgenommen werden können. Demzufolge brauchen die Stützflächen 48 nicht im Bereich der bogenförmigen Abschnitte 21, 22 des Transportweges 16 vorhanden zu sein, wenn in diesen bogenförmigen Abschnitten keine Behandlungsstationen, insbesondere Offset-Druckstationen vorgesehen sind, bei denen derartig große vertikale Kräfte auftreten. Hingegen ist es vorteilhaft, die Führungsschienen 28 über die gesamte Länge des Transportweges 16 durchgehend anzuordnen, also auch in den bogenförmigen Abschnitten 21, 22.

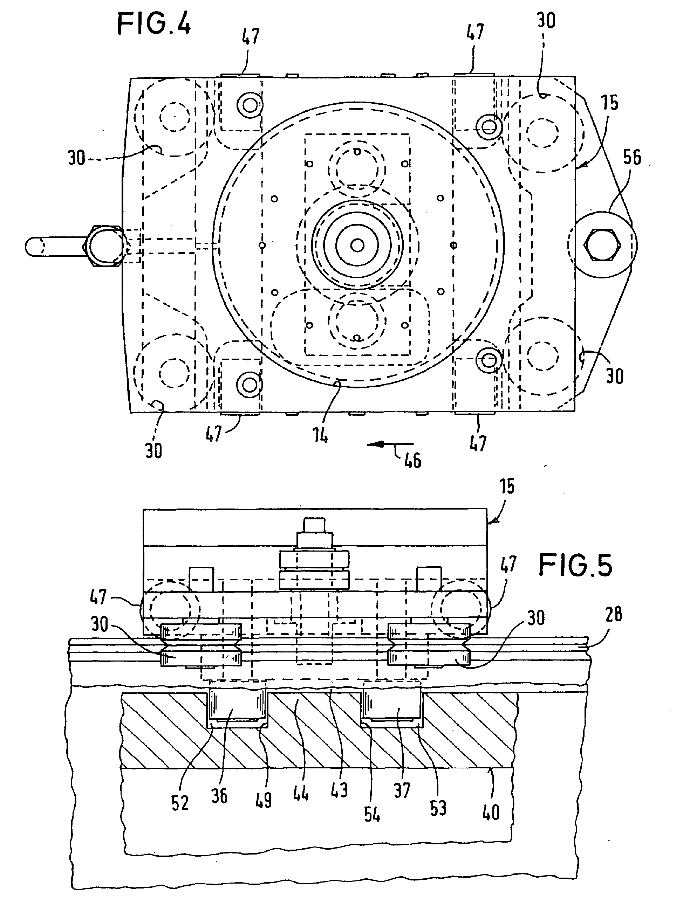

Fig. 4 läßt erkennen, daß die Stützrollen 47 in der Projektion außerhalb der Aufnahme 14 des Objektträgers 12 für die zu bedruckende CD angeordnet sind, so daß eine Beaufschlagung der in der Aufnahme 14 befindlichen CD durch vertikale Druckkräfte nicht zum Entstehen eines Drehmomentes führt, welches am Objektträger 12 angreift.

An seiner - bezogen auf den umlaufenden Transportweg 16 - inneren Seite ist jeder Objektträger 12 mit einer um eine vertikale Achse drehbaren obere Mitnehmerrolle 56 versehen, über die in den gebogenen Abschnitten 21, 22 des Transportweges 16 die Mitnahme des jeweiligen Objektträgers erfolgt. Dazu sind die beiden Transporträder 25, 26 mit über ihrem jeweiligen Umfang regelmäßig verteilt angeordneten radialen Ausnehmungen 58 versehen, deren Abmessungen in der Draufsicht gemäß Fig. 1 an die Querschnittsform der Mitnehmerrollen der Objektträger 12 angepaßt ist. Bei dem in der Zeichnung dargestellten Ausführungsbeispiel werden die radialen Ausnehmungen 58 von gegenüber dem eigentlichen dem Transportrad radial nach außen vorstehenden Mitnehmern 59 getragen, die in einheitlichen Abständen über den Umfang des jeweiligen Transportrades angeordnet sind. Abweichend von dieser Ausführung ist es auch möglich, die radialen Ausnehmungen 58 unmittelbar am Transportrad, also als Ausnehmungen an dessen Umfang, auszubilden.

Die Behandlungsstationen, die in Fig. 1 aus Gründen der Übersichtlichkeit nicht dargestellt sind, sind entlang dem Transportweg 16 angeordnet, und zwar zweckmäßiger Weise derart, daß die Behandlungsstationen, die eine besondere Präzision bezüglich der Ausrichtung des Objektes zur Behandlungsstation, beispielsweise einem Druckwerk verlangen, den linearen Abschnitten 18, 20 zugeordnet sind, in denen der Transport mit großer Präzision durch die jeweilige Transportschnecke 24 erfolgen kann, wohingegen jene Behandlungsstationen, die keine große Präzision erfordern und insbesondere auch nicht zu einer Beaufschlagung des Objektes und damit des Objektträgers mit starken Kräften führen, zumindest teilweise den bogenförmigen Abschnitten 21 und 22 des Transportweges 16 zugeordnet sein können. Dabei kann es sich beispielsweise um Siebdruckstationen, Stationen zur Identitätsprüfung der Objekte und zur Prüfung der Qualität des Druckbildes handeln.

So können die zu bedruckenden Objekte in der Station P, welche dem Transportrad 25 und damit dem bogenförmigen Abschnitt 21 des Transportweges 16 zugeordnet ist, in den dort jeweils befindlichen Objektträger 12 eingelegt werden. Im Zuge des kontinuierlichen Transportes durch das Transportrad 25 besteht die Möglichkeit, beispielsweise unter Anwendung des Siebdruckverfahrens auf das Objekt zunächst eine Grundierung aufzubringen. Dazu ist keine zusätzliche Abstützung des Objektträgers 12 erforderlich, da dabei keine merklichen vertikalen Kräfte zur Einwirkung kommen und somit die durch die Führungsschienen 28 bewirkte Abstützung ausreicht. Bei kontinuierlicher Rotation des Transportrades wäre es dabei erforderlich, das Siebdruckwerk während des Druckvorganges synchron mit dem Transportrad bzw. dem von diesem getragenen Objekt zu bewegen.

Im Zuge der weiteren Drehbewegung gelangt der Objektträger in die in Fig. 1 vom Objektträger 12a eingenommene Position, in welcher sich dieser - bezogen auf die Bildebene der Fig. 1 - etwa am unteren Scheitelpunkt des Transportrades 25 befindet. An diesem Scheitelpunkt geht der bogenförmige Abschnitt 21 des Transportweges in den linearen Abschnitt 18 über, wobei letzterer die Tangente an dem durch den Transportteller 25 beschriebenen Kreis in diesem Scheitelpunkt bildet. Bezüglich der Führung des Objektträgers an den Führungsschienen 28 stellt dies keine Besonderheit dar, da die Führungsschienen 28, wie bereits erwähnt, sich durchgehend über den gesamten Transportweg 16 erstrecken. Es erfolgt lediglich bezüglich des Antriebs ein Wechsel, da hier der Objektträger 12a von der Transportschnecke 24, die dem linearen Abschnitt 18 des Transportweges zugeordnet ist, übernommen wird. Dazu ist es erforderlich, daß im Augenblick der Übernahme die Umfangsgeschwindigkeit im Bereich der jeweiligen Mitnehmerausnehmung 58 etwa übereinstimmt mit der Lineargeschwindigkeit, die von der Schnecke 24 auf den Objektträger 12a übertragen wird, wobei die beiden Mitnehmerrollen 36, 37 in den Bereich des Schnekkenganges 44 gelangen und der Objektträger von diesem im Zuge der Drehbewegung der Schnecke mitgenommen wird. Fig. 1 zeigt, daß im Verlauf der weiteren Drehbewegung des Transportrades 25 der Mitnehmer 59 mit seiner Ausnehmung 58 außer Eingriff mit der oberseitigen Mitnehmerrolle 56 kommt, ohne daß dazu besondere Maßnahmen erforderlich wären.

Im Verlauf des dann durch die dem linearen Abschnitt 18 zugeordnete Schnecke 24 erfolgenden Transport kann das Objekt weiteren Behandlungen unterzogen werden, beispielsweise in zwei aufeinanderfolgenden Offset-Druckstationen, wobei in jeder Station ein Einzeldruckbild auf dem Objekt aufgebracht wird. Hierbei kann es zweckmäßig sein, zwecks weiterer Verbesserung der Druckqualität in Transportrichtung 46 hinter jeder Offset-Druckstation eine Trocknungsstation vorzusehen, so daß jedes Einzeldruckbild eine Trocknung erfährt, bevor das jeweils folgende Druckbild aufgebracht wird. Diese Trocknung erfolgt zumindest in dem Ausmaß, daß eine Vermischung der jeweils in der folgenden Druckstation aufgebrachten Druckfarbe mit der in der vorherigen Druckstation aufgebrachten Druckfarbe nicht mehr möglich ist. Die Trocknung der Einzeldruckbilder braucht dazu nicht so weitgehend zu erfolgen, daß die Farbe völlig hart und spröde wird. Vielmehr ist es zweckmäßig, die Trocknung nur so weit durchzuführen, daß einerseits eine Vermischung der Farben beider aufeinanderfolgender Einzeldruckbilder ausgeschlossen ist, andererseits jedoch noch eine Verbindung zweier übereinanderliegender Farbschichten oder Farbpunkte möglich ist.

Die Geschwindigkeit, mit welcher der Objektträger entlang dem linearen Abschnitt 18 transportiert wird, ist abhängig vom Steigungswinkel des Schneckenganges. Fig. 2 zeigt, daß der Schneckengang 44 der Transportschnecke 24 über deren Längserstreckung unterschiedliche Steigungen aufweist, so daß beispielsweise in den Bereichen 62 und 64, in denen der Schneckengang 44 dieselbe Steigung hat, eine Bedruckung mittels Offset erfolgen kann, bei welcher die konstante Geschwindigkeit, mit welcher der jeweilige Objektträger durch die Schnecke 24 vortransportiert wird, von der Umfangsgeschwindigkeit des Druckzylinders abhängt. In den jeweils in Transportrichtung 46 folgenden Stationen, in denen der Steigungswinkel des Schneckenganges 44 so gewählt ist, daß der Transport des Objektträgers mit langsamerer Geschwindigkeit erfolgt, kann dann jeweils eine Trocknungsvorrichtung vorgesehen sein. Es ist selbstverständlich auch möglich, eine Behandlung bei stehendem Objektträger durchzuführen. Dazu ist es, wie bereits erwähnt, lediglich erforderlich, daß ein Abschnitt des Schnekkenganges keine Steigung aufweist.

An dem dem Transportrad 26 zugekehrten Ende der Schnecke 24 des linearen Abschnittes 18 erfolgt bezüglich des Transports die Übergabe des Objektträgers von der Schnecke an das Transportrad 26 in umgekehrter Reihenfolge. Bei Erreichen des Endes der Schnecke ist die Steigung des Schneckengangs so zu wählen, daß die Lineargeschwindigkeit des Objektträgers 12 der Umfangsgeschwindigkeit der Mitnehmeröffnungen 58 an dem Transportrad 22 entspricht. Die oberseitige Mitnehmerrolle 56 am Objektträger gerät in die Ausnehmung 58 des zugeordneten Auslegers 59, der dann den Objektträger vorbewegt, wobei dessen untere Mitnehmerrollen im Augenblick der Übergabe zugleich außer Eingriff mit dem Gang 24 der Schnecke gelangen.

Dem bogenförmigen Abschnitt 22 des Transportweges 16 können wiederum bestimmte Behandlungsstationen zugeordnet sein, die keine große vertikale Druckbeanspruchung der Objekte erfordern.

Dem zweiten linearen Transportabschnitt 20, der ebenfalls eine Transportschnecke aufweist, können dann beispielsweise wieder zwei Offset-Druckstationen mit in Transportrichtung jeweils danach angeordneten Trocknungsstationen zugeordnet sein, wobei zumindest im Bereich der Druckstationen Stützflächen 48 vorgesehen sind, über die die vertikalen Kräfte vom Gehäuse 32 der diesem linearen Abschnitt 20 zugeordneten Schnecke aufgenommen werden. Die Übergabe der Objektträger von dem Transportrad 26 an die dem linearen Abschnitt 20 zugeordnete Schnecke erfolgt in der bereits beschriebenen Weise. Am Ende des linearen Abschnittes 20 wird der Objektträger dann wiederum vom Transportrad 25 übernommen, dem eine weitere Siebdruckstation zugeordnet sein kann, in welcher z. B. das aus den in den Offset-Druckstationen aufgebrachten Einzeldruckbildern resultierende Gesamtdruckbild mit einer durchsichtigen Schutzschicht aus einem geeigneten Lack oder dgl. versehen werden kann. Das dekorierte Produkt wird dann in der Station S aus dem Objektträger herausgenommen, nachdem ggf. zuvor noch eine Überprüfung der Qualität des Druckbildes durchgeführt worden war.

Die Anzahl der Objektträger, die auf dem Transportweg 16 umlaufen, hängt im wesentlichen ab von der Anzahl der Behandlungen, denen die Objekte unterzogen werden, und damit auch von der Anzahl der Behandlungsstationen, mit denen die Vorrichtung 10 versehen ist.

Abweichend von dem in der Zeichnung dargestellten Ausführungsbeispiel kann die Anordnung auch so getroffen sein, daß wenigstens eines der beiden Transporträder 25, 26 schrittweise rotiert wird. In diesem Fall kann es zweckmäßig sein, die Übergabe des Objektträgers vom Schaltteller an die Schnecke und umgekehrt durchzuführen, wenn der Objektträger keine Bewegung entlang dem Transportweg 16 ausführt. Dies könnte zu einer Ausgestaltung führen, bei welcher die Transportschnecke an dem Ende, an welchem ein schrittweise umlaufendes Transportrad vorhanden ist, einen Abschnitt des Schneckenganges aufweist, der senkrecht zur Längsachse der Schnecke verläuft, also keine Steigung aufweist, um so im Augenblick des Stillstandes des Objektträgers die Verbindung zwischen diesem bzw. der Mitnehmerrolle 36 und dem Schneckengang 44 herzustellen.

Die präzise Ausrichtung der zu bedruckenden Objekte zum Druckwerk, insbesondere zu einem Offset-Druckzylinder, setzt voraus, daß das Objekt auch in der Aufnahme 14 eine definierte Position einnimmt. Im allgemeinen wird dazu in der Station P, in welcher die Objekte nacheinander den Objektträgern aufgegeben werden, oder in einer folgenden Station, das Objekt in üblicher Weise mittels eines Dornes, welcher beispielsweise durch die Mittelöffnung jeder CD geführt wird, zum Objektträger ausgerichtet und danach in dieser ausgerichteten Lage mittels Vakuum gehalten, durch welches das Objekt gegen die Aufnahme bzw. die letztere tragende Halterung 15 gedrückt wird. Zu diesem Zweck kann jeder Objektträger 12 über einen Schlauch 60 mit einer Unterdruckquelle verbunden sein. Der Schlauch 60 kann mit einer mit den Objektträgern 12 umlaufenden Zuführungsleitung versehen sein, wobei die Länge des Schlauches 60 so zu wählen ist, daß er die in den linearen Abschnitten 18, 20 des Transportweges 16 aufgrund der unterschiedlichen Geschwindigkeiten der Objektträger auftretenden unterschiedliche Abstände zwischen diesen ausgleichen kann. Ferner kann jedem Objektträger ein Anschluß 63 für Druckluft zugeordnet sein, der lediglich in der Entnahmestation mit einer Druckluftquelle verbunden wird, um den auf das Objekt einwirkenden Unterdruck in der Entnahmestation zu neutralisieren und so das Herausnehmen des Objektes aus der Aufnahme zu erleichtern.

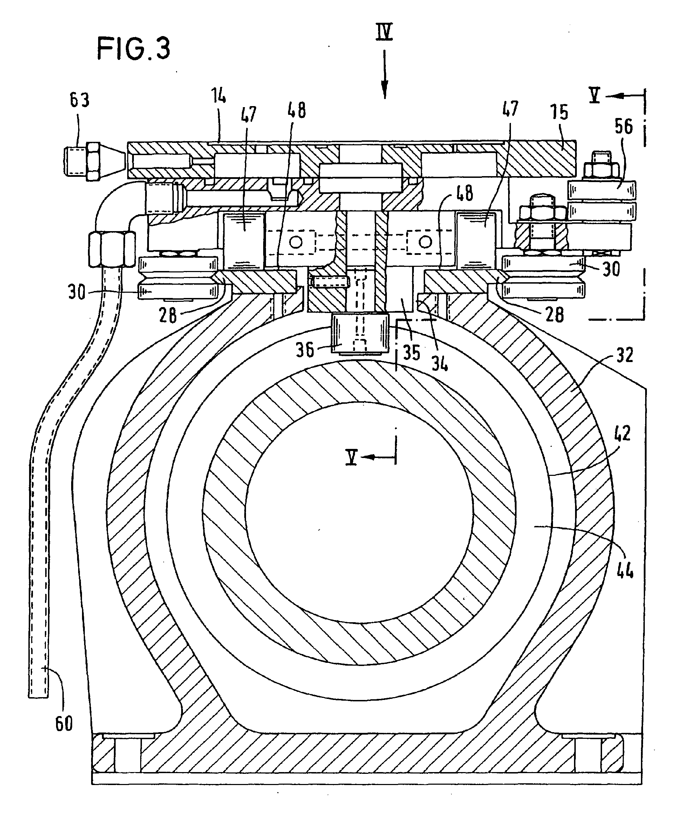

Das Ausführungsbeispiel gemäß Fig. 6, in welcher auch Behandlungsstationen und die Einrichtungen zum Eingeben und Herausnehmen der Objekte schematisch dargestellt sind, stimmt in allen wesentlichen Teilen sowie hinsichtlich der Anordnung derselben mit dem der Figuren 1 - 5 überein, so daß für gleiche Teile auch gleiche, jedoch jeweils um 100 höhere Bezugszeichen verwendet werden.

Eine Besonderheit des Ausführungsbeispiels gemäß Fig. 6 besteht darin, daß, mit einer Ausnahme, alle Handhabungs- und Behandlungsstationen den linearen Abschnitten 118, 120 des Transportweges zugeordnet sind derart, daß entlang dem linearen Abschnitt 118 vier Offset-Druckstationen A - D vorgesehen sind, denen jeweils eine Trocknungsstation E, F, G, H nachgeschaltet ist. Dabei sind die Trocknungsstationen E, F, G ebenfalls entlang dem linearen Abschnitt 118 angeordnet, wohingegen die Trocknungsstation H im Bereich des bogenförmigen Abschnittes 122 vorgesehen und damit dem Transportrad 126 zugeordnet ist. Die Trocknungsstation H verläuft etwa tangential zum bogenförmigen Abschnitt 122 des Transportweges, um so bei kontinuierlichem Umlaufen des Transportrades eine möglichst lange Verweilzeit des zu trocknenden Objektes im Bereich der Trocknungsstation H zu erreichen.

Dem anderen linearen Abschnitt 120 des Transportweges sind zwei Siebdruckstationen K und L zugeordnet, denen in Transportrichtung 146 jeweils eine ebenfalls mit wenigstens einem UV-Strahler versehene Trocknungsstation M und N nachgeordnet ist.

Der Transport der zu bedruckenden Objekte zur Druckmaschine 110 und der Abtransport der bedruckten Objekte von der Druckmaschine erfolgt durch ein vorzugsweise als Transportband 165 ausgebildetes Transportmittel. Dabei sind die Objekte in Form von Stapeln in Magazinen 166 angeordnet, die in üblicher Weise mit einer vertikalen Spindel 168 versehen sind, die einen Halte- und Führungsstift darstellt und das zentrale Loch aller den jeweiligen Stapel bildenden Objekte, die hier als CDs ausgebildet sind, durchgreift. Unterseitig wird das Magazin 166 von einem tellerartigen Fuß oder dgl. 170 begrenzt. Derartige Magazine sind allgemein üblich und bekannt.

Die in noch zu beschreibender Weise zu vereinzelnden Objekte werden in der Station P in die Aufnahme 114 des jeweils dort befindlichen Objektträgers 112 eingelegt.

Zur Durchführung der Vereinzelung der Objekte sind im Bereich der Aufgabestation P neben dem Transportband 165 an dessen der Druckmaschine zugekehrten Seite zwei in Transportrichtung 172 nebeneinander befindliche Vereinzelungsstationen 174, 175 vorgesehen, die jeweils ein Magazin 166 mit dem von diesem getragenen CD-Stapel aufnehmen. Den beiden Vereinzelungsstationen 174, 175 ist ein gemeinsames Formstück 176 zugeordnet, welches an seiner dem Transportband 165 zugekehrten Seite mit zwei etwa halbkreisförmigen Ausnehmungen 174a, 175a versehen ist, deren Abmessungen an den Durchmesser der Bodenteller 170 der Magazine 166 angepaßt sind. Auf diese Weise werden die beiden in den Vereinzelungsstationen 174, 175 befindlichen Magazine 166 zu einer Zwischenposition 178 ausgerichtet, in welcher ein Identitäts-Check jeder CD erfolgt, bevor diese in der Station P in die Aufnahme 114 des jeweils dort befindlichen Objektträgers eingelegt wird.

Den beiden Vereinzelungsstationen 174, 175 ist ein gemeinsames Transportelement in Form eines Sauggreifers zugeordnet, welcher jeweils zwischen einer der beiden Entnahmestationen 174, 175 einerseits und der Zwischenposition 178 andererseits hin- und herbewegbar ist und in der Zeichnung lediglich durch die beiden Pfeile 179 angedeutet ist. Dieser Sauggreifer 179, bei dem es sich um eine übliche und bekannte Einrichtung handelt, nimmt jeweils eine, nämlich die zuoberst befindliche CD von einem CD-Stapel in einem der beiden in den Vereinzelungspositionen 174, 175 befindlichen Magazine 166 ab und legt sie in der Zwischenstation 178 ab. Nach Durchführung des Identität-Checks z. B. mittels einer Kamera und unabhängig von dessen Ergebnis wird die CD durch einen zweiten Sauggreifer, der durch den Pfeil 181 angedeutet ist, aus der Zwischenstation 178 herausgenommen in der leeren Aufnahme 114 des jeweils in der Station P befindlichen Objektträgers abgelegt. Falls die nunmehr in der Aufnahme 114 befindliche CD die richtige Identität aufweist, erfolgt der Transport in der bereits im Zusammenhang mit dem Ausführungsbeispiel gemäß den Fig. 1 - 5 beschriebenen Weise durch die entlang dem Transportweg 116 angeordneten Behandlungsstationen.

Falls der Identitäts-Check in der Position 178 zu dem Ergebnis geführt hat, daß es sich um eine falsche CD handelt, wird diese CD in der in Transportrichtung 146 folgenden Station Q durch einen Sauggreifer aus der Aufnahme 114 des jeweiligen Wagens herausgenommen und einem Magazin 180 zugeführt, das analog den Magazinen 166 ausgebildet und auf einer als Drehteller 182 ausgebildeten Basis angeordnet ist, die drei weitere derartige Magazine 180a, 180b, 180c trägt, von denen das Magazin 180a ebenfalls der Aufnahme von Objekten dient, die beim Identitäts-Deck beanstandet wurden und deshalb sofort wieder aus der Druckmaschine 110 herausgenommen werden. Der zwischen der Aufnahme 114 in der Station Q und dem Magazin 180 - oder irgendeinem der anderen in dieser Position befindlichen Magazinen 180a, 180b, 180c - bewegbare Sauggreifer ist durch den die Hin- und Herbewegung des Sauggreifers symbolisierenden Doppelpfeil 183 angedeutet. Hier wird ein Doppelpfeil deshalb verwendet, weil in noch zu beschreibender Weise auch ein Transport von einem in der Position des Magazins 180 befindlichen Magazins des Drehtellers 182 zu der jeweils in der Station Q befindlichen Aufnahme 114 erfolgt.

Das Vorhandensein von zwei Magazinen 166 in der Vereinzelungsposition 174 bzw. 175 hat den Vorteil, daß der Sauggreifer 179, sobald er die letzte CD beispielsweise von dem Stapel des in der Position 174 befindlichen Magazin abgenommen hat, bei der nächsten Bewegung in die Ausgangsposition zur Aufnahme einer CD in die Vereinzelungsposition 175 bewegt wird und nacheinander die in dem in dieser Position befindlichen Magazin gestapelten CDs aufnimmt und in die Zwischenposition 178 transportiert. Dieser Wechsel der Bewegung des Greifers 179 von der einen Position 174 in die andere Position 175 und umgekehrt erfolgt ohne irgendeine zeitliche Verzögerung, so daß nach dem Entleeren eines Magazins, dessen CD-Stapel beispielsweise 150 CDs aufweist, die Beschickung der Druckmaschine 110 ohne Unterbrechung mit Objekten aus dem anderen Magazin fortgesetzt werden kann.

Der Austausch eines leeren in der Vereinzelungsposition 174 bzw. 175 befindlichen Magazins 166 gegen ein mit Objekten gefülltes Magazin kann in der Weise geschehen, daß der Zutransport der in Transportrichtung 172 vor den beiden Vereinzelungsstationen 174, 175 befindlichen, mit Objekten gefüllten Magazinen bei laufendem Transportband 165 unterbrochen wird. Dazu ist ein im wesentlichen quer zur Transportrichtung 172 hin- und herverschiebbarer Anschlag 184 vorgesehen, der in seiner in der Zeichnung dargestellten wirksamen Position in den Transportweg der auf den Transportband 165 befindlichen Magazine hineinragt derart, daß das in Transportrichtung 172 vor dem Anschlag 184 befindliche erste Magazin 166a gegen den Anschlag stößt und an einer weiteren Bewegung gehindert wird. Entsprechendes gilt dann für alle dahinter befindlichen Magazine. Zweckmäßigerweise ist dabei das Tansportband 165 so ausgebildet, daß die Reibung zwischen der die Magazine 166 tragenden Oberfläche des Transportbandes und den Magazinen sehr gering ist, so daß das Transportband ohne weiteres unter den auf ihm stehenden stationären Magazinen hindurchlaufen kann.

Die in Transportrichtung 172 hinter dem Anschlag 184 befindlichen Magazine werden vom Band 165 weitertransportiert, so daß letzteres im Bereich neben den beiden Vereinzelungsstationen 174, 175 dann kein Magazin 166 aufweist, also leer ist, und somit das leere Magazin aus der Vereinzelungsstation 174 bzw. 175 durch eine entsprechende Querbewegung auf das Transportband 165 verschoben werden kann. Wenn nunmehr der Anschlag 184 aus seiner in Fig. 6 dargestellten wirksamen Position in die unwirksame Position quer zur Transportrichtung 172 zurückbewegt wird, erfolgt wieder eine Mitnahme der in Transportrichtung 172 vor dem Anschlag 184 befindlichen Magazine 166, wobei das zuvor aus der Vereinzelungsstation 174 bzw. 175 auf das Transportband 165 verschobene Magazin durch das kontinuierlich laufende Transportband ebenfalls abtransportiert wird.

Weiterhin ist jeder der beiden Vereinzelungspositionen 174, 175 ein Anschlag 186, 187 zugeordnet, der analog dem Anschlag 184 zwischen einer wirksamen und einer unwirksamen Position hin- und herverschiebbar ist. Nach dem Abtransport des leeren Magazins, das zuvor aus der Vereinzelungsposition 174 auf das Transportband 165 verschoben worden war, durch das Band 165 und vor dem Verschieben des Anschlages 184 in seine unwirksame Position wird der Anschlag 186 in seine wirksame Position, also in den Bewegungsbereich der auf dem Transportband 165 befindlichen Magazine 166, hinein verschoben mit dem Ergebnis, daß nach Entfernen des Anschlages 184 das in Transportrichtung 172 erste mit zu bedruckenden Objekten gefüllte Magazin 166a gegen den Anschlag 186 stößt und durch diesen an einer weiteren Mitnahme durch das Transportband gehindert wird. Nunmehr kann das vor dem Anschlag 186 befindliche Magazin 166a quer zur Transportrichtung 172 in die Position 174 verschoben werden, wobei die Ausrichtung zum Übergabegreifer 179 in der bereits beschriebenen Weise durch das Formstück 176 bzw. die Wandung der darin befindlichen Ausnehmung 174a erfolgt.

In entsprechender Weise erfolgt der Austausch der Magazine in der Vereinzelungsstation 175, wobei dazu der Anschlag 187 in die wirksame Stellung zu bewegen wäre. Die Mittel, durch die die Querverschiebung der Magazine vom Tansportband 165 in die jeweilige Vereinzelungsstation 174 bzw. 175 und entgegengesetzt dazu erfolgt, sind in der Zeichnung nicht dargestellt. Mit 188 sind zwei vertikal verschiebbare Stützelemente bezeichnet, durch die der im Magazin befindliche CD-Stapel auf das Niveau angehoben wird, bei welchem sich die jeweils zuoberst befindliche CD im Bereich des Sauggreifers 179 befindet.

Bevor die bedruckten Objekte in der Entnahmestation S aus der jeweils dort befindlichen Aufnahme 114 herausgenommen werden, durchlaufen sie die Stationen R, in welcher eine Kontrolle des Druckbildes beispielsweise durch eine Kamera erfolgt. Der Entnahmestation S ist ein Drehteller 189 zugeordnet, der ebenfalls mit vier Magazinen 190, 190a, 190b, 190c für Objekte versehen ist. Zwischen der in der Entnahmestation S jeweils befindlichen Aufnahme 114 und dem Magazin 190 - oder einem anderen in dieser Zwischenposition befindlichen Magazin des Drehtellers 189 - ist ein Sauggreifer hin- und herbewegbar, der durch den Pfeil 191 angedeutet ist. Den Spindeln der Magazins 190, 190a ist eine in der Zeichnung nicht dargestellte Zwischenablage zugeordnet, die beispielsweise aus einem nach Art einer Zange ausgebildeten Bauteil besteht, das die zugehörige Spindel umfaßt, wobei die beiden Zangenteile zwischen einer geschlossenen Position, in welcher sie die Zwischenablage für die aus der jeweils in der Entnahmestation S herausgenommenen CD bilden, und einer offenen Position bewegbar sind, in welcher zwischen den beiden Teilen eine Öffnung vorhanden ist, die größer ist als die CD, so daß diese nach unten durch die Zwischenablage hindurchfällt. Die von der zangenartigen Zwischenablage eingenommene Position wird bestimmt vom Ergebnis der Kontrolle des Druckbildes in der Station R. Wenn das Druckbild nicht den qualitativen Erfordernissen entspricht, wird die zangenförmige Zwischenablage geöffnet, so daß die CD durch die Teile der Zwischenablage hindurch nach unten fällt und dort zunächst verbleibt, bis sich ein entsprechend großer Stapel von CDs angesammelt hat, deren Druckbild in der Station R beanstandet worden war. Im anderen Fall, also bei ausreichender Druckbildqualität, bleibt die die Zwischenablage darstellende Zange geschlossen, so daß die CD auf dieser Zange abgelegt wird, von der sie dann im Zuge eines folgenden Arbeitstaktes von einem Sauggreifer abgenommen wird, um in eine von zwei Sammelstationen 192 bzw. 193 gebracht und dort auf die Spindel des der jeweiligen Sammelstation befindlichen Magazins aufgebracht und gestapelt zu werden. Diese Anordnung entspricht der der beiden Vereinzelungsstationen 174, 175, so daß der durch die Pfeile 194 angedeutete Sauggreifer zwischen dem Magazin 190 bzw. 190a auf dem Drehteller 189 einerseits und jeweils einer der beiden Sammelstationen 192, 193 bewegbar ist. Da durch das Vorhandensein von zwei Vereinzelungsstationen 174, 175 eine ununterbrochene Zufuhr von Objekten zur Druckmaschine 110 möglich ist, besteht demzufolge die Notwendigkeit, auch zwei Sammelpositionen 192, 193 vorzusehen, um die bedruckten Objekte in ununterbrochener Folge aufnehmen zu können.

Für das Stapeln der bedruckten CDs in den Sammelstationen 192, 193 werden die Magazine 166 verwendet, die zuvor in den Vereinzelungsstationen 174, 175 entleert worden waren. Nach der in der vorstehend beschriebenen Weise erfolgten Rückführung des leeren Magazins aus der Station 174 bzw. 175 auf das Transportband 165 wird dieses in Richtung des Pfeiles 172 weitertransportiert, bis es in eine Position gelangt, in welcher es der Sammelstation 192 bzw. 193 gegenüberliegt. Dabei ist wiederum jeder der beiden Stationen ein Anschlag 195 bzw. 196 zugeordnet, der analog den Anschlägen 184, 185, 186 zwischen einer wirksamen und einer unwirksamen Position verschiebbar ist.

Das gefüllte Magazin wird im Zuge einer Querbewegung aus der Sammelstation 192 bzw. 193 auf das Band 165 geschoben, wobei der Transport der in Transportrichtung 172 vor der jeweiligen Station 192 bzw. 193 befindlichen Magazine durch Wirksamstellen des Anschlags 198 unterbrochen ist. Umgekehrt gilt, daß zum Einführen eines leeren Magazins in eine der Stationen 192 bzw. 193 der jeweilige Anschlag 195 bzw. 196 in die wirksame Position gebracht wird, so daß ein in einer der Stationen 174 bzw. 175 entleertes Magazin vor den jeweiligen Anschlag 195 bzw. 196 gebracht und danach durch eine entsprechende Bewegung quer zur Transportrichtung 172 in die Station 192 bzw. 193 verschoben wird.

Die anderen beiden Magazine 180b, 180c des erstes Drehtellers 182 dienen zur Aufnahme von Objekten, die Attrappen darstellen und lediglich für jene Betriebsphasen der Maschine benutzt werden, in denen diese anläuft, bis sich die gewünschte Druckqualität einstellt, oder in denen irgendwelche Versuche durchgeführt werden, für die keine Original-Objekte, die teuer sein können, verwendet zu werden brauchen. Die Übergabe der Attrappen von einem der Magazine 180b, 180c an die Druckmaschine erfolgt durch den bereits erwähnten Sauggreifer 183, wobei die Attrappen in den jeweils in der Station Q befindlichen Objektträger 112 eingelegt werden. Die Entnahme dieser Attrappen erfolgt durch den Sauggreifer 191 in der Entnahmestation S. Allerdings ist der Drehteller 189 dann in einer Position, in welcher eines der Magazine 190b, 190c, die ausschließlich der Aufnahme der Attrappen dienen, sich in der Position befindet, die in Fig. 6 der Zeichnung vom Magazin 190 eingenommen wird. Dabei sind die einzelnen Funktionen der Gesamtmaschine, also einschließlich der Einrichtung zum Zuführen und Herausnehmen der Objekte bzw. Attrappen, steuertechnisch so miteinander verknüpft, daß in jedem Fall bei Zuführung von Attrappen aus einem der damit versehenen Magazine 180b, 180c des Drehtellers 182 automatisch eine Stapelung dieser Attrappen lediglich in jenen Magazinen 190b, 190c des Drehtellers 189 erfolgt, die für diese Attrappen vorgesehen sind. Dadurch wird vermieden, daß Attrappen unbeabsichtigerweise in den Transportfluß der "echten" Objekte gelangen.

Das Vorhandensein von jeweils zwei Magazinen 180, 180a, 180b, 180c sowie 190, 190a; 190b, 190c auf den Drehtellern 182 bzw. 189 dient ebenfalls dem Zweck, Unterbrechungen des Betriebsablaufes der Druckmaschine durch das Auswechseln von leeren oder vollen Magazinen zu vermeiden.

In den Behandlungs- oder Handhabungsstationen, in denen eine Bewegung der Objektträger nicht zweckmäßig oder möglich ist, kann die Schnecke so ausgebildet sein, daß ein Teilabschnitt des Schneckengangse in einer Ebene senkrecht zur Längsachse der Schnecke verläuft, so daß trotz der Rotationsbewegung der Schnecke während einer bestimmten Zeit keine Verschiebung des Objektträgers entlang dem Transportweg erfolgt. Dies kann beispielsweise bei den Siebdruckstationen und/oder den Stationen der Fall sein, in denen die Objekte in die Objektträger eingelegt oder aus diesen herausgenommen werden.

## Patentansprüche

1. Vorrichtung zum Dekorieren von Objekten, die entlang einem zumindest auf einem Teilabschnitt seiner Erstreckung linearen Transportweg (16) durch Druckstationen mit einem Druckzylinder umfassende Behandlungsstationen transportiert werden, **dadurch gekennzeichnet, dass** dem wenigstens einen linearen Transportwegabschnitt (18, 20) als Transportmittel wenigstens eine Schnecke (24) zugeordnet ist, deren wenigstens einer Schneckengang (44) mit wenigstens einer an einem entlang dem Transportweg (16) bewegbaren, als Wagen ausgebildeten Träger (12) für das zu dekorierende Objekt angebrachten Mitnehmerrolle (36, 37) zusammenwirkt derart, dass ein Formschluss zwischen Schneckengang und Objektträger vorhanden ist, und das Objekt durch die rotierende Schnecke zum aufeinanderfolgenden Aufbringen von sich zu einem Gesamtdruckbild ergänzenden Einzeldruckbildern mit konstanter Geschwindigkeit durch die Druckstationen (A D) führbar ist, die der Umfangsgeschwindigkeit der Mantelfläche des Druckzylinders entspricht, und der wenigstens eine Schneckengang (44) entlang dem Längsverlauf der Schnecke (24) zur Steuerung der Transportgeschwindigkeit des Objektträgers (12) unterschiedliche Steigungen aufweist.

2. Vorrichtung nach Anspruch 1, **dadurch gekennzeichnet, dass** die Schnecke (24) zumindest zeitweilig mit konstanter Geschwindigkeit umläuft.

3. Vorrichtung nach Anspruch 1,**dadurch gekennzeichnet, dass** der Schneckengang (44)wenigstens einen Abschnitt aufweist, bei welchem bei rotierender Schnecke (24) kein Vortransport des Objektträgers (12) erfolgt.

4. Vorrichtung nach Anspruch 1, **dadurch gekennzeichnet, dass** der Schneckengang (44) mit einer Ausnehmung (43) am Objektträger (12) in Eingriff ist.

5. Vorrichtung nach Anspruch 1, **dadurch gekennzeichnet, dass** der Schneckengang (44) unterschiedlich breit ausgeführt ist und die Ausnehmung (43) am Objektträger (12) für den Eingriff des Schneckenganges (44) durch wenigstens zwei Rotationskörper (36, 37) gebildet wird, deren Abstand dem Verlauf und/oder der Breite des Schneckenganges (44) angepasst ist.

6. Vorrichtung nach Anspruch 1, **dadurch gekennzeichnet, dass** sie mit wenigstens einem Führungsmittel (28) für die Objektträger (12) versehen ist, das wenigstens im Bereich der wenigstens einen Schnecke (24) entlang dem Transportweg (16) verläuft.

7. Vorrichtung nach Anspruch 6, **dadurch gekennzeichnet, dass** das Führungsmittel zwei in einem im wesentlichen horizontalen Abstand voneinander befindliche Führungsschienen (28) mit einem V-förmigen Querschnitt aufweist, von denen jede mit wenigstens einer am Objektträger (12) angebrachten Führungsrolle (30) zusammen wirkt, deren Mantelfläche einen entsprechend V-förmigen Querschnitt aufweist.

8. Vorrichtung nach Anspruch 1, **dadurch gekennzeichnet, dass** der Objektträger (12) mit Stützrollen (47) versehen ist, die wenigstens in Teilabschnitten des der wenigstens einen Schnecke (24) zugeordneten Transportwegs (18, 20) auf wenigstens einer Stützfläche (48) laufen.

9. Vorrichtung nach den Ansprüchen 7 und 8, **dadurch gekennzeichnet, dass** die Stützflächen (48) an den Führungsschienen (28) angeordnet sind.

10. Vorrichtung nach Anspruch 8, **dadurch gekennzeichnet, dass** die Tragrollen (47) des Objektträgers (12) in der Projektion außerhalb der zu bedruckenden Fläche angeordnet sind.

11. Vorrichtung nach Anspruch 1, **dadurch gekennzeichnet, dass** wenigstens der Rotationskörper (36), an welchem die den Transport des Objektträgers (12) bewirkende Vortriebskraft der Schnecke (24) angreift, im Längsschnitt eine geringfügig ballige Ausgestaltung aufweist.

12. Vorrichtung nach Anspruch 1, **dadurch gekennzeichnet, dass** wenigstens zwei lineare Transportwegabschnitte (18, 20) vorgesehen sind, die im wesentlichen in horizontaler Ebene in einem Abstand voneinander angeordnet und durch zwei kreisbogenförmige Transportwegabschnitte (21, 22) miteinander verbunden sind, und wenigstens einem der beiden linearen Transportwegabschnitte (18, 20) eine Schnecke (24) zugeordnet ist.

13. Vorrichtung nach Anspruch 12, **dadurch gekennzeichnet, dass** den bogenförmigen Transportwegabschnitten (21, 22) jeweils ein Transportrad (25, 26) zugeordnet ist und der Objektträger (12) mit Mitteln versehen ist, die die Herstellung einer den Transport des Objektträgers (12) bewirkenden Verbindung zwischen Objektträger (12) und Transportrad (25, 26) ermöglichen.

14. Vorrichtung nach Anspruch 13, **dadurch gekennzeichnet, dass** für die Herstellung der Verbindung zwischen Objektträger (12) und Transportrad (25, 26) andere Mittel am Objektträger (12) benutzt werden als für die Herstellung der Verbindung zwischen Schnecke (24) und Objektträger (12) und am Übergang zwischen einem linearen Transportwegabschnitt (18, 20) auf einen bogenförmigen Transportwegabschnitt (21, 22) und umgekehrt ein Wechsel der Mittel stattfindet, die die Verbindung zwischen Objektträger (12) und Schnecke (24) bzw. Transportrad (25/26) bewirken.

15. Vorrichtung nach Anspruch 14, **dadurch gekennzeichnet, dass** im Augenblick des Überganges von der wenigstens einen Schnecke (24) zum jeweiligen Transportrad (25, 26) und umgekehrt die Umfangsgeschwindigkeit des Transportrades etwa übereinstimmt mit der Lineargeschwindigkeit, die von der Schnecke (24) auf den Objektträger (12a) übertragen wird.

16. Vorrichtung nach Anspruch 6, **dadurch gekennzeichnet, dass** das Führungsmittel (28) sich über den gesamten Transportweg (16) erstreckt.

17. Vorrichtung nach Anspruch 13, **dadurch gekennzeichnet, dass** beide Transporträder (25, 26) den gleichen Durchmesser aufweisen und die beiden linea ren Transportwegabschnitte (18, 20) zueinander parallel verlaufen.

18. Vorrichtung nach Anspruch 13, **dadurch gekennzeichnet, dass** die beiden Transporträder (25, 26) unterschiedliche Durchmesser aufweisen.

19. Vorrichtung nach Anspruch 13, **dadurch gekennzeichnet, dass** wenigstens eines der beiden Transporträder (25, 26) kontinuierlich umläuft.

20. Vorrichtung nach Anspruch 13, **dadurch gekennzeichnet, dass** wenigstens eines der beiden Transporträder diskontinuierlich umläuft.

21. Vorrichtung nach Anspruch 1, **dadurch gekennzeichnet, dass** der Eingabestation (P), in welcher die zu bedruckenden Objekte in die Objektträger (112) eingelegt werden, wenigstens zwei jeweils in einer Vereinzelungsposition (174, 175) befindliche Magazine (166) für die zu bedruckenden Objekte zugeordnet sind und beiden Magazinen (166) ein gemeinsames Transportelement (179) zugeordnet ist, welches die Objekte einzeln einem der beiden Magazine (166) entnimmt und in Richtung auf die Eingabestation (P) transportiert, und beide Magazine (166) wechselweise nach wenigstens teilweiser Entleerung gegen gefüllte Magazine austauschbar sind und der Entnahmestation (S), in welcher die bedruckten Objekte aus den Objektträgern (112) herausgenommen werden, wenigstens zwei Magazine (166) zum Sammeln der bedruckten Objekte zugeordnet sind und beiden Magazinen ein gemeinsames Transportelement (194) zugeordnet ist, durch welches die bedruckten Objekte zu einem der beiden Magazine transportiert werden und beide Magazine wechselweise gegen wenigstens teilweise leere Magazine austauschbar sind.

22. Vorrichtung nach Anspruch 21, **dadurch gekennzeichnet, dass** zwischen den in der Vereinzelungsposition (174, 175) befindlichen Magazinen (166) und der Eingabestation (P) eine gemeinsame Position (178) für die Prüfung der Identität der Objekte und zwischen dieser Prüfposition (178) und der Eingabestation (P) ein weiteres Transportelement (181) vorgesehen ist und in Transportrichtung (146) hinter der Eingabestation (P) eine Station (Q) vorgesehen ist, in welcher Objekte mit falscher Identität aus dem Objektträger (112) entfernt werden.

23. Vorrichtung nach Anspruch 22, **dadurch gekennzeichnet, dass** der Entnahmestation (Q), in welcher Objekte mit falscher Identität aus dem Objektträger (112) herausgenommen werden, wenigstens ein Magazin (180, 180a) zugeordnet ist, welches ausschließlich für Objekte mit falscher Identität bestimmt ist, und ein Transportelement (183) vorgesehen ist, welches das Objekt mit falscher Identität zwischen der dafür bestimmten Entnahmestation (Q) und dem Magazin (180, 180a) transportiert.

24. Vorrichtung nach Anspruch 23, **dadurch gekennzeichnet, dass** das Magazin (180, 180 a) für Objekte mit falscher Identität von einer Basis (182) getragen ist, welche wenigstens ein weiteres Magazin (180b, 180c) trägt, und die Basis (182) derart verstellbar ist, dass die wenigstens zwei Magazine (180, 180a, 180b, 180c) wechselweise in die zum Zusammenwirken mit dem Transportelement (183) erforderliche Position bewegt werden können.

25. Vorrichtung nach Anspruch 24, **dadurch gekennzeichnet, dass** wenigstens eines der anderen Magazine (180b, 180c) zur Aufnahme von Attrappen dient, die bei bestimmten Betriebszuständen der Vorrichtung echte Objekte ersetzen, und das Transportelement (183) die Attrappen von dem jeweiligen Magazin (180b, 180c) zur Station (Q) transportiert, die als Aufnahmestation für die Attrappen dient.

26. Vorrichtung nach Anspruch 21, **dadurch gekennzeichnet, dass** zwischen der Entnahmestation (S) für bedruckte Objekte und den wenigstens zwei in der Sammelposition (192, 193) befindlichen Magazinen (166) zum Sammeln von bedruckten Objekten eine Zwischenposition angeordnet ist, in welcher die bedruckten Objekte durch ein erstes Transportmittel (191) abgelegt werden, und die Zwischenposition auf einer Basis (189) angeordnet ist, die wenigstens zwei Magazine (190, 190a, 190b, 190c) trägt, von denen wenigstens eines (190b, 190c) zur Aufnahme von Attrappen und wenigstens eines (190, 190a) zur Aufnahme von echten Objekten dient, und die Basis (189) derart verstellbar ist, dass die Magazine (190, 190a) für die echten Objekte und die Magazine (190b, 190c) für die Attrappen wechselweise in die zum Zusammenwirken mit dem Transportelement (191) erforderliche Position bewegt werden können, und die Basis (182), die der Station (Q) für das Eingeben der Attrappen zugeordnet ist, und Basis (189) für die Zwischenposition (190) und das wenigstens eine Magazin (190b, 190c) für die Attrappen steuerungstechnisch so miteinander verknüpft sind, dass bei Beschicken der Druckmaschine mit Attrappen ein zum Sammeln der bedruckten Attrappen bestimmtes Magazin (190b, 190c) sich in der für das Zusammenwirken mit dem Transportelement (193) erforderlichen Zwischenposition befindet.

27. Vorrichtung nach Anspruch 12, **dadurch gekennzeichnet, dass** sämtliche Druckstationen den linearen Transportwegabschnitten (118, 120) zugeordnet sind.

28. Vorrichtung nach Anspruch 12, **dadurch gekennzeichnet, dass** sämtliche Offset-Druckstationen demselben linearen Transportwegabschnitt (118) zugeordnet sind.

29. Verfahren zum Dekorieren von Objekten, die entlang einem zumindest auf einem Teilabschnitt (18, 20) seiner Erstreckung linearen Transportweg durch Druckstationen mit wenigstens einem Drückzylinder umfassender Behandlungsstationen transportiert und dabei von einem Objektträger (12) getragen werden, **dadurch gekennzeichnet, dass** der Antrieb der jeweils als Wagen ausgebildeten Objektträger (12) durch wenigstens eine einem linearen Transportwegabschnitt (18, 20) zugeordneten Transportschnecke (24) erfolgt, deren wenigstens einer Schneckengang (44) mit wenigstens einer an einem Objektträger (12) angebrachten Mitnehmerrolle (36, 37) zusammenwirkt derart, dass ein Formschluss zwischen Schneckengang und Objektträger vorhanden ist, und as Objekt zum aufeinanderfolgenden Aufbringen von sich zu einem Gesamtdruckbild ergänzenden Einzeldruckbildern mit konstanter Geschwindigkeit durch die Druckstationen (A - D) geführt wird, die der Umfangsgeschwindigkeit der Mantelfläche des Druckzylinders entspricht, und die Transportgeschwindigkeit des Objektträgers(12) durch unterschiedliche Steigungen des wenigstens einen Schneckenganges (44) entlang dem Längsverlauf der Schnecke gesteuert wird.

30. Verfahren nach Anspruch 29, **dadurch gekennzeichnet, dass** die Schnecke (24) zumindest zeitweilig mit kontinuierlicher Geschwindigkeit umläuft.

## Claims

1. Apparatus for decorating articles which are transported along a transport path (16) which is linear at least on a portion of its extent through treatment stations including printing stations with a printing cylinder, **characterised in that** associated with the at least one linear transport path portion (18, 20) as a transport means is at least one screw (24) whose at least one screw flight (44) co-operates with at least one entrainment roller (36, 37) mounted on a carrier (12) movable along the transport path (16) and in the form of a carriage, for the article to be decorated, in such a way that there is a positively locking connection between the screw flight and the article carrier, and the article can be guided through the printing stations (A-D) by the rotating screw at a constant speed which corresponds to the peripheral speed of the peripheral surface of the printing cylinder for successively applying individual print images which supplement each other to form an overall print image, and the at least one screw flight (44) is of different pitches along the longitudinal extent of the screw (24) for controlling the transport speed of the article carrier (12).

2. Apparatus according to claim 1 **characterised in that** the screw (24) rotates at least temporarily at a constant speed.

3. Apparatus according to claim 1 **characterised in that** the screw flight (44) has at least one portion at which no forward transport of the article carrier (12) occurs when the screw (24) is rotating.

4. Apparatus according to claim 1 **characterised in that** the screw flight (44) is in engagement with an opening (43) on the article carrier (12).

5. Apparatus according to claim 1 **characterised in that** the screw flight (44) is of differing width and the opening (43) at the article carrier (12) for engagement of the screw flight (44) is formed by at least two rotary members (36, 37) whose spacing is adapted to the configuration and/or the width of the screw flight (44).

6. Apparatus according to claim 1 **characterised in that** it is provided with at least one guide means (28) for the article carriers (12), which guide means extends along the transport path (16) at least in the region of the at least one screw (24).

7. Apparatus according to claim 6 **characterised in that** the guide means has two guide rails (28) which are disposed at a substantially horizontal spacing from each other and which are of a V-shaped cross-section and each of which co-operates with at least one guide roller (30) which is mounted to the article carrier (12) and whose peripheral surface is of a correspondingly V-shaped cross-section.

8. Apparatus according to claim 1 **characterised in that** the article carrier (12) is provided with support rollers (47) which at least in portions of the transport path (18, 20) which is associated with the at least one screw (24) run on at least one support surface (48).

9. Apparatus according to claims 7 and 8 **characterised in that** the support surfaces (48) are arranged at the guide rails (28).

10. Apparatus according to claim 8 **characterised in that** the support rollers (47) of the article carrier (12) are arranged in projection outside the surface to be printed upon.

11. Apparatus according to claim 1 **characterised in that** at least the rotary body (36) which is engaged by the forward drive force of the screw (24), which force causes the transport movement of the article carrier (12), is of a slightly crowned configuration in longitudinal section.

12. Apparatus according to claim 1 **characterised in that** there are provided at least two linear transport path portions (18, 20) which are arranged substantially in a horizontal plane at a spacing from each other and which are connected together by two transport path portions (21, 22) in the form of a circular arc, and a screw (24) is associated with at least one of the two linear transport path portions (18, 20).

13. Apparatus according to claim 12 **characterised in that** a respective transport wheel (25, 26) is associated with each of the arcuate transport path portions (21, 22) and the article carrier (12) is provided with means which make it possible to make a connection between the article carrier (12) and the transport wheel (25, 26) for effecting transport of the article carrier (12).

14. Apparatus according to claim 13 **characterised in that** other means on the article carrier (12) are used for making the connection between the article carrier (12) and the transport wheel (25, 26) than for making the connection between the screw (24) and the article carrier (12) and a change in the means which make the connection between the article carrier (12) and the screw (24) and the transport wheel (25/26) respectively occurs at the transition between a linear transport path portion (18, 20) to an arcuate transport path portion (21, 22) and vice-versa.

15. Apparatus according to claim 14 **characterised in that** at the moment of the transition from the at least one screw (24) to the respective transport wheel (25, 26) and vice-versa the peripheral speed of the transport wheel is approximately coincident with the linear speed which is transmitted by the screw (24) to the article carrier (12a).

16. Apparatus according to claim 6 **characterised in that** the guide means (28) extends over the entire transport path (16).

17. Apparatus according to claim 13 **characterised in that** both transport wheels (25, 26) are of the same diameter and the two linear transport path portions (18, 20) extend in mutually parallel relationship.

18. Apparatus according to claim 13 **characterised in that** the two transport wheels (25, 26) are of different diameters.

19. Apparatus according to claim 13 **characterised in that** at least one of the two transport wheels (25, 26) rotates continuously.

20. Apparatus according to claim 13 **characterised in that** at least one of the two transport wheels rotates discontinuously.

21. Apparatus according to claim 1 **characterised in that** associated with the intake station (P) in which the articles to be printed upon are introduced into the article carriers (112) are at least two magazines (166) respectively disposed in a separating position (174, 175), for the articles to be printed upon, and associated with both magazines (166) is a common transport element (179) which takes the articles individually from one of the two magazines (166) and transports them in a direction towards the intake station (P), and both magazines (166) are alternately replaceable after at least partial emptying by filled magazines and associated with the removal station (S) in which the printed articles are removed from the article carriers (112) are at least two magazines (166) for collecting the printed articles and associated with both magazines is a common transport element (194) by which the printed articles are transported to one of the two magazines and the two magazines are alternately replaceable by at least partially empty magazines.

22. Apparatus according to claim 21 **characterised in that** provided between the magazines (166) which are in the separating position (174, 175) and the intake station (P) is a common position (178) for checking the identity of the articles and provided between said checking position (178) and the intake station (P) is a further transport element (181) and provided downstream of the intake station (P) in the transport direction (146) is a station (Q) in which articles of the wrong identity are removed from the article carrier (112).

23. Apparatus according to claim 22 **characterised in that** associated with the removal station (Q) in which articles of the wrong identity are removed from the article carrier (112) is at least one magazine (180, 180a) which is intended exclusively for articles of the wrong identity, and there is provided a transport element (183) which transports the object of the wrong identity between the removal station (Q) intended for same and the magazine (180, 180a).

24. Apparatus according to claim 23 **characterised in that** the magazine (180, 180a) for articles of the wrong identity is carried by a base (182) which carries at least one further magazine (180b, 180c) and the base (182) is displaceable in such a way that the at least two magazines (180, 180a, 180b, 180c) can be moved alternately into the position required for co-operation with the transport element (183).

25. Apparatus according to claim 24 **characterised in that** at least one of the other magazines (180b, 180c) serves for receiving dummy articles which under given operating conditions of the apparatus replace genuine articles, and the transport element (183) transports the dummy articles from the respective magazine (180b, 180c) to the station (Q) which serves as a receiving station for the dummy articles.

26. Apparatus according to claim 21 **characterised in that** arranged between the removal station (S) for printed articles and the at least two magazines (166) which are in the collecting position (192, 193) for collecting printed articles is an intermediate position in which the printed articles are deposited by a first transport means (191) and the intermediate position is arranged on a base (189) which carries at least two magazines (190, 190a, 190b, 190c) of which at least one (190b, 190c) serves to receive dummy articles and at least one (190, 190a) serves to receive genuine articles, and the base (189) is displaceable in such a way that the magazines (190, 190a) for the genuine articles and the magazines (190b, 190c) for the dummy articles can be moved alternately into the position required for co-operation with the transport element (191), and the base (182) which is associated with the station (Q) for introduction of the dummy articles and the base (189) for the intermediate position (190) and the at least one magazine (190b, 190c) for the dummy articles are linked together in control relationship in such a way that when the printing machine is loaded with dummy articles a magazine (190b, 190c) intended for collecting the printed dummy articles is in the intermediate position required for co-operation with the transport element (193).

27. Apparatus according to claim 12 **characterised in that** all printing stations are associated with the linear transport path portions (118, 120).

28. Apparatus according to claim 12 **characterised in that** all offset printing stations are associated with the same linear transport path portion (118).

29. A method of decorating articles which are transported along a transport path which is linear at least on a portion (18, 20) of its extent through treatment stations including printing stations with at least one printing cylinder and in that operation are carried by an article carrier (12), **characterised in that** the drive for the article carriers (12) which are each in the form of a respective carriage is effected by at least one transport screw (24) which is associated with a linear path portion (18, 20) and whose at least one screw flight (44) co-operates with at least one entrainment roller (36, 37) mounted to an article carrier (12) in such a way that there is a positively locking connection between the screw flight and the article carrier, and the article is guided through the printing stations (A-D) for successive application of individual print images which supplement each other to form an overall print image at a constant speed which corresponds to the peripheral speed of the peripheral surface of the printing cylinder and the transport speed of the article carrier (12) is controlled by different pitches of the at least one screw flight (44) along the longitudinal extent of the screw.

30. A method according to claim 29 **characterised in that** the screw (24) rotates at least temporarily at a continuous speed.

## Revendications

1. Dispositif pour décorer des objets qui sont transportés le long d'un parcours (16) linéaire au moins sur une section partielle de son étendue, à travers des stations de traitement comprenant des stations d'impression avec un cylindre d'impression, **caractérisé en ce qu'**au moins une vis sans fin (24) est affectée à au moins une des sections linéaires du parcours (18, 20) en tant que moyen de transport, dont au moins une spire (44) concoure avec au moins un galet entraîneur (36, 37) placé au niveau d'un support (12) pour l'objet à décorer, réalisé en tant que chariot et mobile le long du parcours (16), de telle sorte qu'il existe une liaison solidaire entre la spire et le porte-objet, **en ce que** l'objet peut être guidé, pour application successive d'images imprimées individuelles se complétant pour former une image imprimée entière, par la vis sans fin tournante, à travers les stations d'impression (A- D), à une vitesse constante qui correspond à la vitesse circonférentielle de la surface d'enveloppe du cylindre d'impression, et **en ce qu'**au moins une spire (44) présente différents pas le long du passage longitudinal de la vis sans fin (24) pour commander la vitesse de déplacement du porte-objet (12).

2. Dispositif selon la revendication 1, **caractérisé en ce que** la vis sans fin (24) tourne à vitesse constante au moins temporairement.

3. Dispositif selon la revendication 1, **caractérisé en ce que** la spire (44) présente au moins une section au niveau de laquelle le porte-objet (12) n'est pas préalablement déplacé lorsque la vis sans fin (24) tourne.

4. Dispositif selon la revendication 1, **caractérisé en ce que** la spire (44) est en prise avec un évidement (43) au niveau du porte-objet (12).

5. Dispositif selon la revendication 1, **caractérisé en ce que** la largeur de la spire (44) varie et **en ce que** l'évidement (43) au niveau du porte-objet (12) est formé pour l'engagement de la spire (44) par au moins deux corps rotatifs (36, 37) dont l'espacement est adapté au passage et/ou à la largeur de la spire (44).

6. Dispositif selon la revendication 1, **caractérisé en ce qu'**il est muni au moins d'un moyen de guidage (28) pour les porte-objets (12) qui passe au moins dans la zone d'au moins une vis sans fin (24) le long du parcours (16).

7. Dispositif selon la revendication 6, **caractérisé en ce que** le moyen de guidage présente deux rails de guidage (28) espacés essentiellement horizontalement l'un de l'autre et possédant une section transversale en V, chacun concourant avec au moins un galet de guidage (30) placé au niveau du porte-objet (12), dont la surface d'enveloppe présente une section transversale en V et adaptée.

8. Dispositif selon la revendication 1, **caractérisé en ce que** le porte-objet (12) est muni de galets supports (47) qui passent sur au moins une surface d'appui (48) au moins dans des sections partielles du parcours (18, 20) affecté à au moins une vis sans fin (24).

9. Dispositif selon les revendications 7 et 8, **caractérisé en ce que** les surfaces d'appui (48) sont disposées au niveau des rails de guidage (28).

10. Dispositif selon la revendication 8, **caractérisé en ce que** les galets porteurs (47) du porte-objet (12) sont disposés, dans la projection, en dehors de la face à imprimer.

11. Dispositif selon la revendication 1, **caractérisé en ce qu'**au moins le corps rotatif (36) au niveau duquel agit la force de traction, occasionnant le transport du porte-objet (12), de la vis sans fin (24), présente, en coupe longitudinale, une forme légèrement bombée.

12. Dispositif selon la revendication 1, **caractérisé en ce qu'**il est prévu au moins deux sections linéaires (18, 20) du parcours, disposées espacées l'une de l'autre essentiellement dans un plan horizontal et reliées ensemble par deux sections en arc de cercle (21, 22) du parcours, et **en ce qu'**une vis sans fin (24) est affectée au moins à une des deux sections linéaires (18, 20) du parcours.

13. Dispositif selon la revendication 12, **caractérisé en ce qu'**une roue de transport (25, 26) est à chaque fois attribuée aux sections en forme d'arc (21, 22) du parcours et **en ce que** le porte-objet (12) est muni de moyens qui permettent la création d'une liaison occasionnant le déplacement du porte-objet (12) entre le porte-objet (12) et la roue de transport (25, 26).

14. Dispositif selon la revendication 13, **caractérisé en ce que**, pour créer la liaison entre le porte-objet (12) et la roue de transport (25, 26), d'autres moyens sont utilisés au niveau du porte-objet (12) lorsque se produit un changement des moyens, occasionnant la liaison entre le porte-objet (12) et la vis sans fin (24) ou la roue de transport (25, 26), pour créer la liaison entre la vis sans fin (24) et le porte-objet (12) et à la transition entre une section linéaire (18, 20) du parcours et une section en forme d'arc (21, 22) du parcours et inversement.

15. Dispositif selon la revendication 14, **caractérisé en ce qu'**au moment de la transition d'au moins une vis sans fin (24) vers la roue de transport (25, 26) respective et inversement, la vitesse circonférentielle de la roue de transport concorde à peu près à la vitesse linéaire transmise par la vis sans fin (24) au porte-objet (12a).

16. Dispositif selon la revendication 6, **caractérisé en ce que** le moyen de guidage (28) s'étend sur tout le parcours (16).

17. Dispositif selon la revendication 13, **caractérisé en ce que** les deux roues de transport (25, 26) présentent le même diamètre et **en ce que** les deux sections linéaires (18, 20) du parcours sont parallèles l'une à l'autre.

18. Dispositif selon la revendication 13, **caractérisé en ce que** les deux roues de transport (25, 26) présentent des diamètres différents.

19. Dispositif selon la revendication 13, **caractérisé en ce qu'**au moins une des deux roues de transport (25, 26) tourne de façon continue.

20. Dispositif selon la revendication 13, **caractérisé en ce qu'**au moins une des deux roues de transport tourne de façon discontinue.

21. Dispositif selon la revendication 1, **caractérisé en ce qu'**au moins deux magasins (166) situés respectivement dans un poste de désassociation (174, 175) et réservés aux objets à imprimer sont affectés à la station d'introduction (P) dans laquelle les objets à imprimer sont placés dans les porte-objets (112), **en ce qu'**est attribué aux deux magasins (166) un élément de transport (179) commun lequel sort les objets individuellement d'un des deux magasins (166) et transporte en direction de la station d'introduction (P), **en ce que** les deux magasins (166) peuvent être remplacés, tour à tour, après au moins évacuation partielle, par des magasins pleins, **en ce qu'**au moins deux magasins (166) destinés à collecter les objets imprimés sont affectés à la station de sortie (S) dans laquelle les objets imprimés sont extraits des porte-objets (112), **en ce qu'**est attribué aux deux magasins un élément de transport (194) commun par lequel les objets imprimés sont transportés vers l'un des deux magasins et **en ce que** les deux magasins peuvent être remplacés tour à tour par des magasins au moins partiellement vides.

22. Dispositif selon la revendication 21, **caractérisé en ce qu'**entre les magasins situés au poste de désassociation (174, 175) et la station d'introduction (P), il est prévu un poste commun (178) pour contrôler l'identité des objets et un autre élément de transport (181) entre ce poste de contrôle (178) et la station d'introduction (P), et **en ce qu'**il est prévu, dans le sens du transport (146), derrière la station d'introduction (P), une station (Q) dans laquelle des objets avec une identité incorrecte sont extraits du porte-objet (112).

23. Dispositif selon la revendication 22, **caractérisé en ce qu'**au moins un magasin (180. 180a), exclusivement destiné aux objets avec une identité incorrecte, est affecté à la station de sortie (Q) dans laquelle les objets avec une identité incorrecte sont extraits du porte-objet (112) et **en ce qu'**il est prévu un élément de transport (183) lequel transporte l'objet avec une identité incorrecte entre la station de sortie (Q) destinée à cet effet et le magasin (180, 180a).

24. Dispositif selon la revendication 23, **caractérisé en ce que** le magasin (180, 180a) destiné aux objets avec une identité incorrecte est porté par une base (182) laquelle porte au moins un autre magasin (180b, 180c) et **en ce que** la base (182) peut être réglée, de telle sorte qu'au moins deux magasins (180, 180a, 180b, 180c) peuvent être alternativement déplacés au poste nécessaire pour concourir avec l'élément de transport (183).

25. Dispositif selon la revendication 24, **caractérisé en ce qu'**au moins un des autres magasins (180b, 180c) sert à loger des objets factices remplaçant de véritables objets à l'occasion de certains états de fonctionnement du dispositif, et **en ce que** l'élément de transport (183) transporte les objets factices du magasin respectif (180b, 180c) à la station (Q) qui sert de station de réception pour les objets factices.

26. Dispositif selon la revendication 21, **caractérisé en ce qu'**un poste intermédiaire dans lequel un premier moyen de transport (191) dépose les objets imprimés, est disposé entre la station de sortie (S) pour les objets imprimés et les magasins (166), au moins deux, situés au poste collecteur (192, 193) pour collecter les objets imprimés, **en ce que** le poste intermédiaire est disposé sur une base (189) qui porte au moins deux magasins (190, 190a, 190b, 190c), un au moins parmi eux (190b, 190c) servant à loger les objets factices, et au moins un autre (190, 190a) servant à loger les véritables objets, **en ce que** la base (189) peut être réglée, de telle sorte que les magasins (190, 190a) pour les véritables objets et les magasins (190b, 190c) pour les objets factices peuvent être alternativement déplacés au poste nécessaire pour concourir avec l'élément de transport (191) et **en ce que** la base (182), affectée à la station (Q) pour introduire les objets factices, la base (189) pour le poste intermédiaire (190) et au moins un des magasins (190b, 190c) pour les objets factices sont liés ensemble en ce qui concerne la technique de commande, de sorte que lors du chargement de la machine d'impression en objets factices, un magasin (190b, 190c) destiné à collecter les objets factices imprimés se trouve au poste intermédiaire nécessaire pour concourir avec l'élément de transport (193).

27. Dispositif selon la revendication 12, **caractérisé en ce que** toutes les stations d'impression sont affectées aux sections linéaires (118, 120) du parcours.

28. Dispositif selon la revendication 12, **caractérisé en ce que** toutes les stations d'impression offset sont affectées à la même section linéaire (118) du parcours.

29. Procédé pour décorer des objets qui sont transportés le long d'un parcours linéaire au moins sur une section partielle (18, 20) de son étendue, à travers des stations de traitement comprenant des stations d'impression avec au moins un cylindre d'impression et portés par un porte-objet (12), **caractérisé en ce que** l'entraînement des porte-objets (12) respectivement conçus en tant que chariot est réalisé par au moins une vis sans fin (24) de transport affectée à une section linéaire (18, 20) du parcours, dont au moins une spire (44) concoure avec au moins un galet entraîneur (36, 37) placé au niveau d'un porte-objet (12), de telle sorte qu'il existe une liaison solidaire entre la spire et le porte-objet, **en ce que** l'objet est guidé, pour application successive d'images imprimées individuelles se complétant pour former une image imprimée entière, à travers les stations d'impression (A - D), à une vitesse constante qui correspond à la vitesse circonférentielle de la surface d'enveloppe du cylindre d'impression, et **en ce que** la vitesse de déplacement du porte-objet (12) est commandée par des pas différents d'au moins une spire (44) le long du passage longitudinal de la vis sans fin.

30. Procédé selon la revendication 29, **caractérisé en ce que** la vis sans fin (24) tourne à vitesse constante au moins temporairement.
